# FASCICULE DE BREVET EUROPEEN

(11) **EP 3 824 214 B1**
(45) Date de publication et mention de la délivrance du brevet: **08.06.2022**
(21) Numéro de dépôt: 19742876.6
(22) Date de dépôt: 24.06.2019
(51) Int. Cl.: F16L 53/37, F16L 59/14

(54) **PROCEDE ET SYSTEME DE CHAUFFAGE ELECTRIQUE DIRECT D'UNE CONDUITE A DOUBLE ENVELOPPE POUR LE TRANSPORT DE FLUIDES**
VERFAHREN UND SYSTEM ZUR DIREKTEN ELEKTRISCHEN BEHEIZUNG EINES DOPPELWANDIGEN ROHRES ZUM TRANSPORT VON FLÜSSIGKEITEN
METHOD AND SYSTEM FOR DIRECT ELECTRIC HEATING OF A DOUBLE-WALLED PIPE FOR TRANSPORTING FLUIDS

(30) Priorité: 16.07.2018 FR 1856544
(43) Date de publication de la demande: 26.05.2021
(73) Titulaire: SAIPEM S.A, 78180 Montigny Le Bretonneux (FR)
(72) Inventeur: HALLOT, Raymond, 78960 VOISINS LE BRETONNEUX (FR)
(74) Mandataire: Cabinet Beau de Loménie
(86) Numéro de dépôt international: PCT/FR2019/051536
(87) Numéro de publication internationale: WO 2020/016498

(56) Documents cités:
- WO-A1-2015/148162
- WO-A1-2015/171902
- GB-A- 2 084 284
- US-A- 4 645 906
- US-B1- 6 264 401

## Description

### Arrière-plan de l'invention

La présente invention se rapporte au domaine général du chauffage électrique des conduites métalliques de transport de fluides, et en particulier des conduites sous-marines reposant au fond de la mer et assurant une liaison entre des puits de production d'hydrocarbures sous-marins, notamment de pétrole et de gaz, et une installation de surface, par exemple une unité flottante de production, de stockage et de déchargement.

Elle concerne plus précisément le chauffage électrique des conduites sous-marines à double enveloppe de type « Pipe In Pipe » ou PIP, c'est-à-dire « conduite dans une conduite », dans laquelle une enveloppe interne qui transporte les fluides et une enveloppe externe coaxiale à l'enveloppe interne qui est en contact avec le milieu ambiant, c'est-à-dire avec l'eau de mer.

Dans un même champ de production d'hydrocarbures offshore, il est courant d'exploiter plusieurs puits qui peuvent être séparés les uns des autres de plusieurs kilomètres, voire dizaines de kilomètres. Les fluides issus de ces différents puits doivent être collectés par des conduites sous-marines métalliques (typiquement en acier) posées au fond de la mer et transférés par des conduites de liaison fond/surface vers une installation de surface, par exemple une plateforme, un navire ou un point de collecte terrestre, qui va les recueillir pour les stocker (et éventuellement les traiter).

Les fluides issus des puits de production ont tendance à se refroidir très rapidement en parcourant les nombreux kilomètres de conduites sous-marines. Or, si aucune disposition n'est prise pour conserver une température de seuil minimale à l'intérieur de ces conduites, le risque est important que les molécules de gaz, notamment le méthane, contenus dans les fluides transportés se combinent aux molécules d'eau pour former, à basse température, des cristaux d'hydrates. Ces derniers peuvent coller aux parois, s'y agglomérer et conduire à la formation de bouchons capables de bloquer la circulation des fluides à l'intérieur des conduites. De même, la solubilité dans le pétrole des composés à haut poids moléculaires, comme les paraffines ou les asphaltènes, diminue lorsque la température baisse, ce qui donne naissance à des dépôts solides capables eux-aussi de bloquer la circulation.

Il est connu de recourir à des solutions passives pour tenter de remédier à ce problème. Ces solutions passives constituent essentiellement à positionner un matériau isolant dans l'espace annulaire délimité entre l'enveloppe interne et l'enveloppe externe de la conduite, ce matériau isolant pouvant être un matériau sec, humide ou bien du vide.

Il est également connu de recourir à des solutions actives pour tenter de remédier à ce problème. L'une de ces solutions consiste à chauffer l'enveloppe interne de la conduite grâce à des câbles électriques, ronds ou plats, qui sont disposés autour de l'enveloppe interne sur toute sa longueur pour la chauffer par effet Joule. La puissance électrique qui est fournie aux câbles électriques provient d'un générateur électrique externe raccordé aux câbles par un ombilical. Cette solution de chauffage électrique qui est appelée « chauffage par traçage » ou « chauffage tracé » (« heat tracing » en anglais) permet de maintenir les fluides transportés dans les conduites à une température supérieure à un seuil critique sur tout leur trajet depuis le puits de production jusqu'à l'installation de surface.

Une autre solution active connue à laquelle s'intéresse plus particulièrement l'invention consiste à chauffer la conduite sous-marine par l'application d'un courant électrique alternatif directement sur l'enveloppe interne en acier de la conduite, l'enveloppe externe également réalisée en acier étant utilisée comme un conducteur pour le chemin retour du courant électrique. Le courant électrique alternatif qui parcourt l'enveloppe interne permet ainsi de chauffer celle-ci par effet de Joule. Plus précisément, le chauffage de l'enveloppe interne est produit par effet Joule par le courant qui la traverse ; la chaleur produite est en grande partie transmise aux fluides dans l'enveloppe interne, les pertes thermiques au travers de l'isolant étant relativement réduites. Cette solution de chauffage électrique qui est appelée en anglais « Direct Electrical Heating » (ou DEH) pour chauffage électrique direct présente l'avantage d'être relativement simple de conception comparé notamment à la solution de chauffage tracé.

En revanche, l'inconvénient principal de la solution de chauffage électrique direct tient dans son faible rendement, typiquement de l'ordre de 50% à 60% environ. En effet, la chaleur dissipée par effet Joule par le courant parcourant l'enveloppe externe est en grande partie perdue à l'environnement puisque l'enveloppe externe est en contact direct avec l'eau de mer. On connait des documents GB 2 084 284, WO 2015/148162, US 6,264,401 et US 6,371,693 de telles solutions de chauffage électrique direct.

### Objet et résumé de l'invention

La présente invention a donc pour but principal de pallier de tels inconvénients en proposant un procédé et un système de chauffage électrique direct qui présente un rendement bien plus élevé.

Ce but est atteint grâce à un procédé de chauffage électrique direct d'une conduite à double enveloppe pour le transport de fluides, la conduite comprenant une enveloppe interne en acier destinée à transporter des fluides et une enveloppe externe en acier positionnée autour de l'enveloppe interne en lui étant coaxiale pour délimiter avec celle-ci un espace annulaire, le procédé comprenant le raccordement mécanique de l'enveloppe interne à l'enveloppe externe à différents intervalles de la conduite, la mise en place d'une isolation électrique et thermique entre l'enveloppe interne et l'enveloppe externe sur toute la longueur de la conduite, et l'application d'un courant électrique alternatif entre une surface externe de l'enveloppe interne et une surface interne de l'enveloppe externe sur toute la longueur de la conduite de façon à chauffer l'enveloppe interne de la conduite par effet de Joule, procédé comprenant en outre, conformément à l'invention, la mise en place sur la surface externe de l'enveloppe interne sur toute la longueur de la conduite d'au moins une couche en matériau résistif et ferromagnétique de façon à augmenter le rapport de puissance électrique transmise à l'enveloppe interne.

Le procédé peut aussi comprendre la mise en place sur la surface interne de l'enveloppe externe sur toute la longueur de la conduite d'une chemise en matériau conducteur et amagnétique.

Les inventeurs ont constaté que l'application sur la surface interne de l'enveloppe externe d'une chemise en matériau conducteur et amagnétique permet d'améliorer notablement le rapport de puissance électrique transmise à l'enveloppe interne, et ainsi d'obtenir un rendement d'au moins 90% et pouvant atteindre 95% en fonction des caractéristiques électromagnétiques des matériaux en présence. De même, l'application sur la surface externe de l'enveloppe interne d'une couche en matériau résistif et ferromagnétique a pour effet d'augmenter sensiblement le rapport de puissance électrique transmise à l'enveloppe interne pour obtenir un rendement d'au moins 85% et pouvant atteindre 90% en fonction des caractéristiques électromagnétiques des matériaux en présence. Enfin, lorsque l'on applique à la fois la chemise en matériau conducteur et amagnétique et la couche en matériau résistif et ferromagnétique, il est possible d'obtenir un rendement pouvant atteindre 98%.

Le courant électrique alternatif qui circule sur la surface externe de l'enveloppe interne par effet de peau et sur la surface interne de l'enveloppe externe par effet de proximité sur toute la longueur de la conduite peut avoir une fréquence de 50 Hz ou 60 Hz.

Le courant électrique alternatif peut être appliqué en un seul point de la conduite. Alternativement, le courant électrique alternatif peut être appliqué en plusieurs points de la conduite correspondant à chacun à au moins une section de conduite, chaque section de conduite comprenant une section d'enveloppe interne et une section d'enveloppe externe.

La mise en place de la chemise en matériau conducteur et amagnétique peut comprendre l'insertion d'un tube en matériau conducteur et amagnétique à l'intérieur de l'enveloppe externe, puis l'expansion sous pression du tube contre la surface interne de l'enveloppe externe.

Corrélativement, l'invention a également pour objet un système de chauffage électrique direct d'une conduite à double enveloppe pour le transport de fluides, la conduite comprenant une enveloppe interne en acier destinée à transporter des fluides et une enveloppe externe en acier positionnée autour de l'enveloppe interne en lui étant coaxiale pour délimiter avec celle-ci un espace annulaire, le système comprenant une pluralité de liaisons mécaniques entre l'enveloppe interne et l'enveloppe externe positionnés à différents intervalles de la conduite, une isolation électrique et thermique entre l'enveloppe interne et l'enveloppe externe positionnée sur toute la longueur de la conduite, et un générateur de courant électrique alternatif appliqué entre une surface externe de l'enveloppe interne et une surface interne de l'enveloppe externe sur toute la longueur de la conduite de façon à chauffer l'enveloppe interne de la conduite par effet de Joule, et comprenant en outre, conformément à l'invention, au moins une couche en matériau résistif et ferromagnétique positionné sur la surface externe de l'enveloppe interne sur toute la longueur de la conduite de façon à augmenter le rapport de puissance électrique transmise à l'enveloppe interne.

Le système peut aussi comprendre la mise en place sur la surface interne de l'enveloppe externe sur toute la longueur de la conduite d'une chemise en matériau conducteur et amagnétique.

La chemise en matériau conducteur et amagnétique est avantageusement réalisée en aluminium, en cuivre, en bronze, en laiton ou en zinc. De préférence, elle possède une épaisseur comprise entre 1 et 6mm.

Quant à la couche en matériau résistif et ferromagnétique, elle est avantageusement réalisée en acier électrique ou en métal amorphe. De préférence, elle possède une épaisseur comprise entre 1 et 3mm.

Les liaisons mécaniques entre l'enveloppe interne et l'enveloppe externe de la conduite peuvent être des épaulements annulaires régulièrement espacés sur toute la longueur de la conduite.

L'enveloppe interne et l'enveloppe externe de la conduite peuvent comprendre chacune une pluralité de sections d'enveloppe raccordées bout à bout les unes aux autres par des cordons de soudure, la chemise en matériau conducteur et amagnétique et la couche en matériau résistif et ferromagnétique présentant des discontinuités au niveau des cordons de soudure.

Dans ce cas, la continuité électrique de la chemise en matériau conducteur et amagnétique et de la couche en matériau résistif et ferromagnétique peut être réalisée, soit directement au travers des enveloppes interne et externe, soit indirectement au travers d'une bague annulaire conductrice ou d'un manchon conducteur qui sont positionnés au niveau des cordons de soudure.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 est une vue schématique d'une conduite sous-marine à double enveloppe pour le transport d'hydrocarbures munie d'un système de chauffage électrique direct selon un mode de réalisation de l'invention ;
- la figure 2 est une loupe de la figure 1 ;
- les figures 3 et 4 montrent des variantes de réalisation de la continuité électrique de la chemise en matériau conducteur et amagnétique et de la couche en matériau résistif et ferromagnétique au niveau des cordons de soudure ; et
- la figure 5 est une vue schématique d'une conduite sous-marine à double enveloppe pour le transport d'hydrocarbures munie d'un système de chauffage électrique direct selon un autre mode de réalisation de l'invention.

### Description détaillée de l'invention

L'invention concerne le chauffage électrique direct (ou « Direct Electrical Heating » en anglais) de toute conduite métallique terrestre ou sous-marine de transport de fluides, et notamment au chauffage électrique direct des conduites sous-marines en acier à double enveloppe reposant au fond de la mer et assurant un transport entre des puits de production d'hydrocarbures sous-marins, notamment de pétrole et de gaz, et une installation de surface.

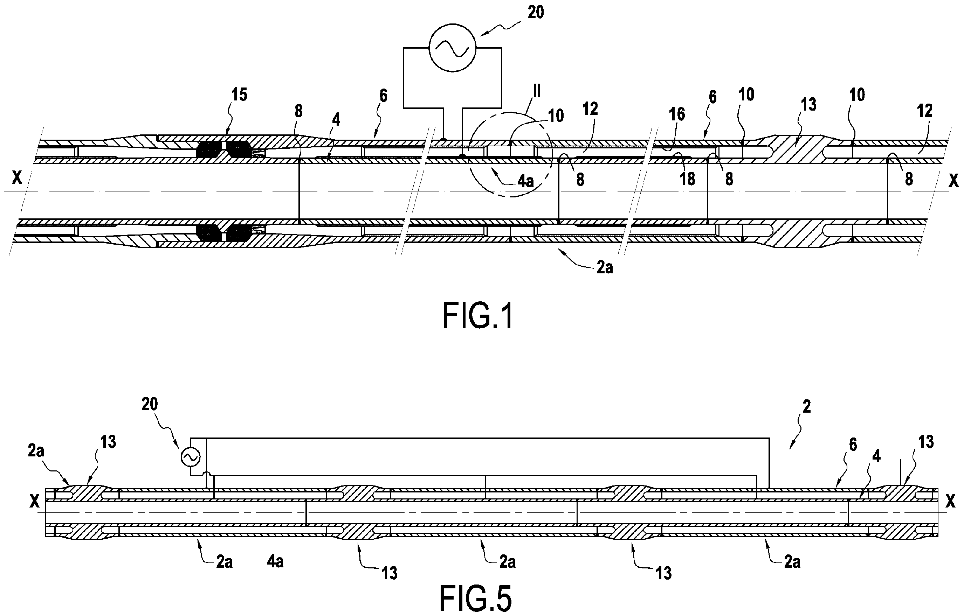

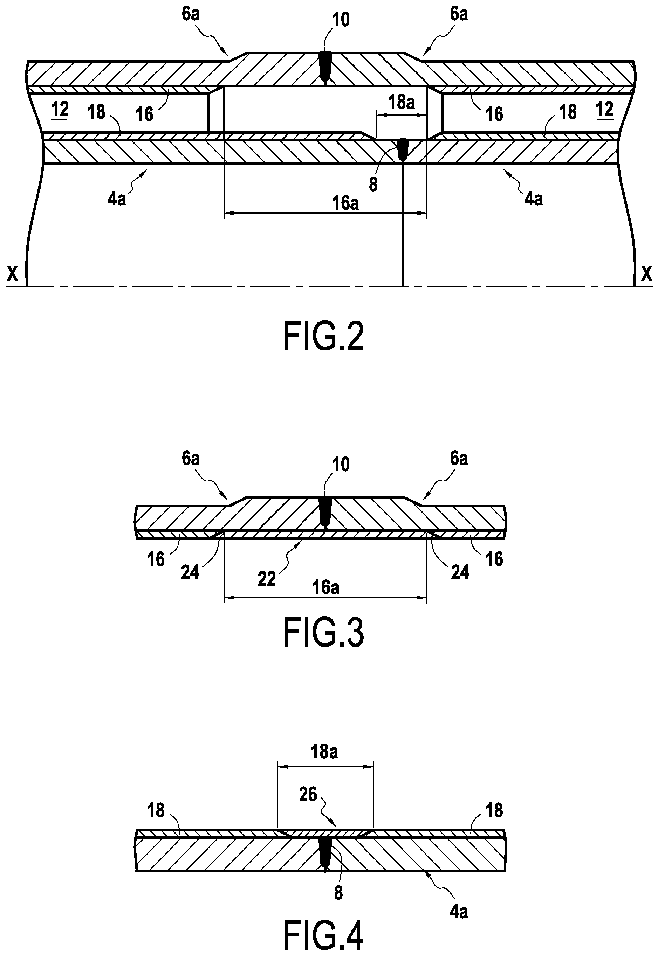

Une conduite sous-marine à double enveloppe de type « Pipe in Pipe » (ou « PIP ») telle que représentée sur les figures 1 et 2 est une conduite 2 qui comprend une enveloppe interne 4 centrée sur un axe longitudinal X-X et destinée à transporter des hydrocarbures issus de puits de production, et une enveloppe externe 6 disposée autour de l'enveloppe interne en lui étant coaxiale et destinée à être en contact direct avec l'eau de mer environnante.

Les enveloppes interne 4 et externe 6 de la conduite sous-marine sont typiquement réalisées en acier au carbone. Bien entendu, d'autres matériaux conducteurs de l'électricité pourraient être utilisés pour ces enveloppes, notamment de l'acier allié (type acier inoxydable), de l'aluminium, du cuivre, du carbone...

Ce type de conduite sous-marine est typiquement utilisé dans la production offshore d'hydrocarbures par grande profondeur. Dans le cadre de telles installations, les conduites à double enveloppe peuvent être assemblées à terre en plusieurs sections de conduite 2a, chaque section de conduite comprenant une section d'enveloppe interne 4a et une section d'enveloppe externe 6a.

Comme représenté sur la figure 2, les sections d'enveloppe interne 4a sont raccordées bout à bout les unes aux autres par des cordons de soudure 8 pour former l'enveloppe interne de la conduite. De même, les sections d'enveloppe externe 6a sont raccordées bout à bout les unes aux autres par des cordons de soudure 10 pour former l'enveloppe externe de la conduite.

De plus, les sections d'enveloppe interne 4a et les sections d'enveloppe externe 6a délimitent entre elles des espaces annulaires 12 qui comprennent des moyens d'isolation électrique et thermique (non représentés sur les figures). Typiquement, ces moyens d'isolation peuvent se présenter sous la forme de vide ou rempli d'un matériau isolant thermique.

A chaque extrémité des enveloppes interne et externe de la conduite, les espaces annulaires 12 sont fermés de façon étanche par des cloisons d'extrémité 13 métalliques. Ces cloisons d'extrémité, communément appelées « bulkheads » en anglais, assurent un raccordement mécanique et électrique entre l'enveloppe interne et l'enveloppe externe.

Par ailleurs, à différents intervalles sur toute la longueur de la conduite, l'enveloppe interne et l'enveloppe externe sont raccordées l'une à l'autre par des liaisons intermédiaires 15, communément appelées « intermediate bulkheads » en anglais, qui permettent de maintenir en position coaxiale les enveloppes entre elles. Ces liaisons intermédiaires 15 sont isolées électriquement (aucun courant électrique ne passe au travers de celles-ci). Par exemple, on pourra utiliser des bagues en élastomère ou en polymère.

En outre, comme indiqué précédemment, les sections d'enveloppe qui forment l'enveloppe interne et l'enveloppe externe de la conduite sont raccordées les unes aux autres par des cordons de soudure 8, 10.

Selon l'invention, il est prévu de mettre en place couche en matériau résistif et ferromagnétique 18 sur la surface externe de l'enveloppe interne 4 sur toute la longueur de la conduite à chauffer. est éventuellement prévu de mettre en place une chemise en matériau conducteur et amagnétique 16 sur la surface interne de l'enveloppe externe 6 sur toute la longueur de la conduite.

Comme il sera discuté ci-après, la présence d'une telle chemise en matériau conducteur et amagnétique 16 et/ou d'une telle couche en matériau résistif et ferromagnétique 18 permet d'augmenter le rapport de puissance électrique transmise à l'enveloppe interne lors de l'application d'un courant électrique pour le chauffage de la conduite sous-marine.

Toujours selon l'invention, un courant électrique alternatif est appliqué à partir d'une alimentation électrique monophasée 20 entre la surface externe de l'enveloppe interne 4 et la surface interne de l'enveloppe externe 6 sur toute la longueur de la conduite de façon à chauffer l'enveloppe interne de la conduite par effet de Joule. En pratique, l'un des deux câbles de la phase est connecté sur l'extérieur de l'enveloppe interne, et l'autre sur l'intérieur de l'enveloppe externe.

Plus précisément, le chauffage de l'enveloppe interne de la conduite est obtenu par une combinaison d'effets interactifs qui comprennent notamment des effets de résistance électrique et des effets électromagnétiques (tels que des effets de peaux et de proximité).

Le courant électrique qui circule sur la surface externe de l'enveloppe interne 4 par effet de peau et sur la surface interne de l'enveloppe externe 6 de la conduite par effet de proximité est typiquement un courant électrique alternatif (sinusoïdal ou non) ayant une fréquence de l'ordre de 50 Hz ou de 60 Hz.

Les inventeurs ont constaté que l'efficacité d'un chauffage électrique direct tel que décrit ci-dessus est augmentée de deux façons : en augmentant pour l'enveloppe interne le produit résistivité électrique par perméabilité magnétique et en diminuant pour l'enveloppe externe le produit résistivité électrique par perméabilité magnétique.

Les inventeurs ont également constaté que le produit résistivité par perméabilité de l'enveloppe interne peut être augmenté par l'ajout sur la surface externe de l'enveloppe interne d'une couche en matériau résistif et ferromagnétique. Quant au produit résistivité par perméabilité de l'enveloppe externe, il est augmenté par l'ajout sur la surface interne de l'enveloppe externe d'une chemise en matériau conducteur et amagnétique. Par ailleurs, il est à noter que ces résultats sont obtenus même sans adhésion de la couche en matériau résistif et ferromagnétique sur la surface externe de l'enveloppe interne et sans adhésion de la chemise en matériau conducteur et amagnétique sur la surface interne de l'enveloppe externe. De même, la couche en matériau résistif et ferromagnétique peut être constituée d'une pluralité de couches séparées par un faible espace.

Par ailleurs, la chemise en matériau conducteur et amagnétique 16 est de préférence réalisée en aluminium, en cuivre, en bronze, en laiton ou en zinc, matériaux donnant les meilleures résultats en terme d'augmentation du rapport de puissance électrique transmise à l'enveloppe interne. Avec de tels matériaux, on obtient un rendement pouvant atteindre 95% en fonction des caractéristiques électriques des matériaux en présence.

De plus, elle possède avantageusement une épaisseur comprise entre 1 et 6 mm afin de maximiser davantage le gain du rapport de puissance électrique transmise à l'enveloppe interne.

Quant à la couche en matériau résistif et ferromagnétique 18, elle est de préférence réalisée en acier électrique ou en métal amorphe ou en alliage de nickel et de fer (mu-métal). Plus précisément, on choisira comme matériau de l'acier électrique (à grains orientés ou non orientés) ou du Metglas^{®} (alliage métallique amorphe). Avec de tels matériaux, on obtient un rendement pouvant atteindre 90% en fonction des caractéristiques électriques des matériaux en présence.

De plus, elle possède avantageusement une épaisseur comprise entre 1 et 3 mm afin de maximiser davantage le gain du rapport de puissance électrique transmise à l'enveloppe interne.

Les deux tableaux ci-dessous montrent des calculs d'efficacité (c'est-à-dire de rapport de puissance électrique transmise à l'enveloppe interne) pour différentes conduites à double enveloppe (n°1 à n°8).

| | **unité** | **Conduite n°1** | **Conduite n°2** | **Conduite n°3** |
|---|---|---|---|---|
| **d_i** | mm | 558,8 | 558,8 | 558,8 |
| **e_i** | mm | 31,75 | 31,75 | 31,75 |
| **d_e** | mm | 736,6 | 736,6 | 736,6 |
| **e_e** | mm | 34,925 | 34,925 | 34,925 |
| **rho_i** | Ω.m | 0,00000013 | 0,00000013 | 0,0000012 |
| **mu_i** | - | 150 | 150 | 1500 |
| **rho_e** | Ω.m | 0,00000013 | 2,80E-08 | 1,30E-07 |
| **mu_e** | - | 150 | 1 | 150 |
| **eta** | - | 0,544 | 0,969 | 0,920 |
| | | | | |

| | **unité** | **Conduite n°4** | **Conduite n°5** | **Conduite n°6** |
|---|---|---|---|---|
| **d_i** | mm | 558,8 | 558,8 | 558,8 |
| **e_i** | mm | 31,75 | 31,75 | 31,75 |
| **d_e** | mm | 736,6 | 736,6 | 736,6 |
| **e_e** | mm | 34,925 | 34.925 | 34,925 |
| **rho_i** | Ω.m | 0,0000012 | 0,00000058 | 0,00000058 |
| **mu_i** | - | 1500 | 750 | 750 |
| **rho_e** | Ω.m | 2,80E-08 | 1,30E-07 | 2,80E-08 |
| **mu_e** | - | 1 | 150 | 1 |
| **eta** | - | 0,997 | 0,849 | 0,993 |

Dans les tableaux ci-dessus :
« d_i » désigne le diamètre externe de l'enveloppe interne ;
« e_i » désigne l'épaisseur de l'enveloppe interne ;
« d_e » désigne le diamètre interne de l'enveloppe externe ;
« e_e » désigne l'épaisseur de l'enveloppe externe ;
« rho_i » désigne la résistivité de l'enveloppe interne ;
« mu_i » désigne la perméabilité de l'enveloppe interne ;
« rho_e » désigne la résistivité de l'enveloppe externe ;
« mu_e » désigne la perméabilité de l'enveloppe externe ;
« eta » désigne l'efficacité (comprise entre 0 et 1) ;
la conduite n°1 correspond à une conduite en acier de l'art antérieur décrite dans la publication WO 2015/148162 ;
la conduite n°2 correspond à une conduite en acier de l'art antérieur décrite notamment dans la publication WO 2015/148162 et dont la surface interne de l'enveloppe externe comprend une chemise en aluminium ;
la conduite n°3 correspond à une conduite en acier de l'art antérieur décrite notamment dans la publication WO 2015/148162 et dont la surface externe de l'enveloppe interne comprend une couche en Metglas^{®} selon le principe de l'invention ;
la conduite n°4 correspond à une conduite en acier de l'art antérieur décrite notamment dans la publication WO 2015/148162 et dont la surface interne de l'enveloppe externe comprend une chemise en aluminium et la surface externe de l'enveloppe interne comprend une couche en Metglas^{®} selon le principe de l'invention ;
la conduite n°5 correspond à une conduite en acier de l'art antérieur décrite notamment dans la publication WO 2015/148162 et dont la surface externe de l'enveloppe interne comprend une couche en mu-métal selon le principe de l'invention ; et
la conduite n°6 correspond à une conduite en acier de l'art antérieur décrite notamment dans la publication WO 2015/148162 et dont la surface interne de l'enveloppe externe comprend une chemise en aluminium et la surface externe de l'enveloppe interne comprend une couche en mu-métal selon le principe de l'invention.

Il ressort de ces tableaux que le principe selon l'invention d'appliquer une couche en matériau résistif et ferromagnétique sur la surface externe de l'enveloppe interne et éventuellement une chemise en matériau conducteur et amagnétique sur la surface interne de l'enveloppe externe permet d'accroitre sensiblement l'efficacité du chauffage électrique de la conduite, cette efficacité passant de 0,544 pour la conduite en acier de l'art antérieur telle que décrite dans la publication WO 2015/148162 à plus de 0,84 pour les mêmes conduites munies d'une couche et éventuellement d'une chemise selon l'invention.

Par ailleurs, comme représenté sur la figure 2, la chemise en matériau conducteur et amagnétique 16 et la couche en matériau résistif et ferromagnétique 18 présentent chacun des discontinuités (respectivement 16a et 18a) au niveau des cordons de soudure 15a, 15b. Ces discontinuités 16a, 18a, qui s'étendent longitudinalement de part et d'autre des cordons de soudure, sont nécessaires pour réaliser les cordons de soudure entre les sections d'enveloppes internes et externes de la conduite.

Ces discontinuités 16a, 18a peuvent être à l'origine d'une très faible perte de rendement. Toutefois, cette perte est acceptable dans la mesure où, en l'absence de reconstitution de ces discontinuités, la continuité électrique de la chemise en matériau conducteur et amagnétique et de la couche en matériau résistif et ferromagnétique est réalisée directement au travers des enveloppes interne et externe de la conduite grâce à la circulation du courant électrique dans la paroi de l'acier en carbone des enveloppes interne et externe.

Selon une alternative, pour éviter cette très faible perte de rendement, il est possible, comme représenté sur la figure 3, d'assurer la continuité électrique de la chemise 16 en matériau conducteur et amagnétique au travers d'une bague annulaire conductrice 22 positionnée au niveau des cordons de soudure.

Cette bague 22 en matériau conducteur permet d'assurer par l'intermédiaire de pattes ou lames flexibles 24 une continuité électrique entre les deux extrémités de chaque discontinuité 16a.

Selon une autre alternative représentée sur la figure 4, la continuité électrique de la couche 18 en matériau résistif et ferromagnétique est réalisée au travers d'un manchon annulaire conducteur 26 positionné au niveau des cordons de soudure 8a et reliant les extrémités des discontinuités 18a.

Par ailleurs, il existe différentes méthodes pour mettre en place la chemise en matériau conducteur et amagnétique 16 à l'intérieur de l'enveloppe externe 6 de la conduite.

L'une de ces méthodes consiste à insérer un tube en matériau conducteur et amagnétique à l'intérieur de l'enveloppe externe, puis à réaliser son expansion sous pression (par exemple sous une pression hydraulique de plusieurs centaines de bar) contre la surface interne de l'enveloppe externe pour lui permettre d'épouser le profil de celle-ci.

Une autre méthode consiste à insérer à l'intérieur de l'enveloppe externe un tube en matériau conducteur et amagnétique qui est fendu et refermé, puis de le relâcher une fois en place dans l'enveloppe externe pour lui permettre de venir contre la surface interne de celle-ci. Ce tube fendu peut aussi être emmanché en force dans l'enveloppe externe en le tirant par l'une de ses extrémités.

Encore une autre méthode consiste à utiliser des bandes longitudinales en gouttière réalisées en matériau conducteur et amagnétique pour les glisser à l'intérieur de l'enveloppe externe et les souder aux extrémités de celle-ci.

Encore une autre méthode consiste à réaliser la chemise en matériau conducteur et amagnétique par projection de poudre sous torche plasma sur la surface interne de l'enveloppe externe de la conduite. Cette projection de poudre pourra également être réalisée seulement aux extrémités de l'enveloppe externe pour servir de zone soudable pour un tube ou des bandes longitudinales insérées à l'intérieur de l'enveloppe externe.

Enfin, encore une autre méthode consiste à réaliser la chemise en matériau conducteur et amagnétique par une galvanisation épaisse.

Dans l'exemple de réalisation de la figure 1, le courant électrique alternatif pour chauffer l'enveloppe est interne est appliqué au milieu de la conduite, c'est-à-dire à égale distance des deux cloisons d'extrémité 13. Les courants de câbles électriques de l'alimentation électrique se répartissent alors en deux courants d'égale intensité parcourant chacun une moitié de conduite, entre le point milieu de celle-ci et l'une des extrémités au travers du corps de l'enveloppe interne, puis entre l'extrémité et le milieu de la conduite au travers du corps de l'enveloppe externe, la continuité électrique entre les deux enveloppes étant assurée par les cloisons d'extrémité 13.

La figure 5 représente une variante de réalisation de l'invention dans laquelle la conduite 2, et plus précisément l'enveloppe interne 4 de celle-ci, est chauffée par application d'un courant électrique alternatif en plusieurs points de la conduite.

De préférence, ces points d'application du courant électrique correspondent à chacun à au moins une section de conduite 2a. Dans ce cas, les sections d'enveloppe interne et les sections d'enveloppe externe de chaque section de conduite sont isolées électriquement les unes des autres au niveau par exemple des cloisons d'extrémité 13 (ou « bulkheads »). Dans cet exemple de la figure 5, trois sections de conduite 2a sont chacune alimentées en courant électrique de façon indépendante et en leur milieu par l'alimentation électrique monophasée 20. Ainsi, le courant d'une section de conduite passe de l'enveloppe interne à l'enveloppe externe en passant par la surface adjacente de la cloison d'extrémité, et de même pour la section de conduite adjacente. En d'autres termes, dans cette configuration à alimentations multiples de la conduite, les deux faces internes des cloisons d'extrémité sont parcourues par des courants issus chacun des réseaux électriques de part et d'autre des cloisons d'extrémité.

## Revendications

1. Procédé de chauffage électrique direct d'une conduite à double enveloppe pour le transport de fluides, la conduite (2) comprenant une enveloppe interne (4) en acier destinée à transporter des fluides et une enveloppe externe (6) en acier positionnée autour de l'enveloppe interne en lui étant coaxiale pour délimiter avec celle-ci un espace annulaire (12), le procédé comprenant :
le raccordement mécanique de l'enveloppe interne à l'enveloppe externe à différents intervalles de la conduite ;
la mise en place d'une isolation électrique et thermique entre l'enveloppe interne et l'enveloppe externe sur toute la longueur de la conduite ; et
l'application d'un courant électrique alternatif entre une surface externe de l'enveloppe interne et une surface interne de l'enveloppe externe sur toute la longueur de la conduite de façon à chauffer l'enveloppe interne de la conduite par effet de Joule ;
**caractérisé en ce qu'**il comprend en outre :
la mise en place sur la surface externe de l'enveloppe interne sur toute la longueur de la conduite d'au moins une couche en matériau résistif et ferromagnétique (18) de façon à augmenter le rapport de puissance électrique transmise à l'enveloppe interne.

2. Procédé selon la revendication 1, comprenant en outre la mise en place sur la surface interne de l'enveloppe externe sur toute la longueur de la conduite d'une chemise en matériau conducteur et amagnétique (16).

3. Procédé selon l'une des revendications 1 et 2, dans lequel le courant électrique alternatif qui circule sur la surface externe de l'enveloppe interne par effet de peau et sur la surface interne de l'enveloppe externe par effet de proximité a une fréquence de 50 Hz ou 60 Hz.

4. Procédé selon l'une quelconque des revendications 1 à 3, dans lequel le courant électrique alternatif est appliqué en un seul point de la conduite.

5. Procédé selon l'une quelconque des revendications 1 à 3, dans lequel le courant électrique alternatif est appliqué en plusieurs points de la conduite correspondant à chacun à au moins une section de conduite (2a), chaque section de conduite comprenant une section d'enveloppe interne (4a) et une section d'enveloppe externe (6a).

6. Procédé selon l'une quelconque des revendications 2 à 5, dans lequel la mise en place de la chemise en matériau conducteur et amagnétique (16) comprend l'insertion d'un tube en matériau conducteur et amagnétique à l'intérieur de l'enveloppe externe, puis l'expansion sous pression du tube contre la surface interne de l'enveloppe externe.

7. Système de chauffage électrique direct d'une conduite à double enveloppe pour le transport de fluides, la conduite (2) comprenant une enveloppe interne (4) en acier destinée à transporter des fluides et une enveloppe externe (6) en acier positionnée autour de l'enveloppe interne en lui étant coaxiale pour délimiter avec celle-ci un espace annulaire, le système comprenant :
une pluralité de liaisons mécaniques (15) entre l'enveloppe interne et l'enveloppe externe positionnés à différents intervalles de la conduite ;
une isolation électrique et thermique entre l'enveloppe interne et l'enveloppe externe positionnée sur toute la longueur de la conduite ; et
un générateur de courant électrique alternatif (20) appliqué entre une surface externe de l'enveloppe interne et une surface interne de l'enveloppe externe sur toute la longueur de la conduite de façon à chauffer l'enveloppe interne de la conduite par effet de Joule ;
**caractérisé en ce qu'**il comprend en outre :
au moins une couche en matériau résistif et ferromagnétique (18) positionnée sur la surface externe de l'enveloppe interne sur toute la longueur de la conduite de façon à augmenter le rapport de puissance électrique transmise à l'enveloppe interne.

8. Système selon la revendication 7, comprenant en outre une chemise en matériau conducteur et amagnétique (16) positionnée sur la surface interne de l'enveloppe externe sur toute la longueur de la conduite.

9. Système selon la revendication 8, dans lequel la chemise en matériau conducteur et amagnétique (16) est réalisée en aluminium, en cuivre, en bronze, en laiton ou en zinc.

10. Système selon l'une des revendications 8 et 9, dans lequel la chemise en matériau conducteur et amagnétique possède une épaisseur comprise entre 1 et 6mm.

11. Système selon l'une quelconque des revendications 7 à 9, dans lequel la couche en matériau résistif et ferromagnétique (18) est réalisé en acier électrique ou en métal amorphe.

12. Système selon l'une quelconque des revendications 7 à 11, dans lequel la couche en matériau résistif et ferromagnétique possède une épaisseur comprise entre 1 et 3mm.

13. Système selon l'une quelconque des revendications 7 à 12, dans lequel les liaisons mécaniques entre l'enveloppe interne et l'enveloppe externe de la conduite sont des épaulements annulaires (15) régulièrement espacés sur toute la longueur de la conduite.

14. Système selon l'une quelconque des revendications 8 à 13,
dans lequel l'enveloppe interne et l'enveloppe externe de la conduite comprennent chacune une pluralité de sections d'enveloppe (2a) raccordées bout à bout les unes aux autres par des cordons de soudure (8, 10), la chemise en matériau conducteur et amagnétique et la couche en matériau résistif et ferromagnétique présentant des discontinuités (16a, 18a) au niveau des cordons de soudure.

15. Système selon la revendication 14, dans lequel la continuité électrique de la chemise en matériau conducteur et amagnétique et de la couche en matériau résistif et ferromagnétique est réalisée directement au travers des enveloppes interne et externe.

16. Système selon la revendication 14, dans lequel la continuité électrique de la chemise en matériau conducteur et amagnétique et de la couche en matériau résistif et ferromagnétique est réalisée indirectement au travers d'une bague annulaire conductrice (22) ou d'un manchon conducteur (26) qui sont positionnés au niveau des cordons de soudure.

## Patentansprüche

1. Verfahren zur direkten elektrischen Beheizung einer Leitung mit Doppelmantel für den Transport von Fluiden, wobei die Leitung (2) einen inneren Mantel (4) aus Stahl, der dazu vorgesehen ist, Fluide zu transportieren, und einen äußeren Mantel (6) aus Stahl umfasst, der um den inneren Mantel herum positioniert ist, wobei er mit diesem koaxial ist, um mit diesem einen ringförmigen Raum (12) zu begrenzen, wobei das Verfahren umfasst:
die mechanische Verbindung des inneren Mantels mit dem äußeren Mantel an unterschiedlichen Abständen der Leitung,
die Montage einer elektrischen und thermischen Isolierung zwischen dem inneren Mantel und dem äußeren Mantel über die gesamte Länge der Leitung, und
das Anlegen eines elektrischen Wechselstroms zwischen einer äußeren Oberfläche des inneren Mantels und einer inneren Oberfläche des äußeren Mantels über die gesamte Länge der Leitung auf solche Weise, dass der innere Mantel der Leitung durch den Joule-Effekt beheizt wird,
**dadurch gekennzeichnet, dass** es ferner umfasst:
die Montage zumindest einer Schicht aus resistivem und ferromagnetischem Material (18) auf der äußeren Oberfläche des inneren Mantels über die gesamte Länge der Leitung auf solche Weise, dass das Verhältnis der auf den inneren Mantel übertragenen elektrischen Leistung erhöht wird.

2. Verfahren nach Anspruch 1, ferner umfassend die Montage einer Auskleidung aus leitendem und nicht magnetischem Material (16) auf der inneren Oberfläche des äußeren Mantels über die gesamte Länge der Leitung.

3. Verfahren nach einem der Ansprüche 1 und 2, wobei der elektrische Wechselstrom, der auf der äußeren Oberfläche des inneren Mantels durch den Skin-Effekt und auf der inneren Oberfläche des äußeren Mantels durch den Proximity-Effekt zirkuliert, eine Frequenz von 50 Hz oder 60 Hz hat.

4. Verfahren nach einem der Ansprüche 1 bis 3, wobei der elektrische Wechselstrom an einem einzigen Punkt der Leitung angelegt wird.

5. Verfahren nach einem der Ansprüche 1 bis 3, wobei der elektrische Wechselstrom an mehreren Punkten der Leitung angelegt wird, von welchen jeder zumindest einer Leitungssektion (2a) entspricht, wobei jede Leitungssektion eine Sektion des inneren Mantels (4a) und eine Sektion des äußeren Mantels (6a) umfasst.

6. Verfahren nach einem der Ansprüche 2 bis 5, wobei die Montage der Auskleidung aus leitendem und nicht magnetischem Material (16) die Einführung eines Rohrs aus leitendem und nicht magnetischem Material in das Innere des äußeren Mantels und die anschließende Ausdehnung des Rohrs unter Druck gegen die innere Oberfläche des äußeren Mantels umfasst.

7. System zur direkten elektrischen Beheizung einer Leitung mit Doppelmantel für den Transport von Fluiden, wobei die Leitung (2) einen inneren Mantel (4) aus Stahl, der dazu vorgesehen ist, Fluide zu transportieren, und einen äußeren Mantel (6) aus Stahl umfasst, der um den inneren Mantel herum positioniert ist, wobei er mit diesem koaxial ist, um damit einen ringförmigen Raum zu begrenzen, wobei das System umfasst:
mehrere mechanische Verbindungen (15) zwischen dem inneren Mantel und dem äußeren Mantel, die an unterschiedlichen Abständen der Leitung positioniert sind,
eine elektrische und thermische Isolierung zwischen dem inneren Mantel und dem äußeren Mantel, die über die gesamte Länge der Leitung positioniert ist, und
einen Generator für elektrischen Wechselstrom (20), der zwischen einer äußeren Oberfläche des inneren Mantels und einer inneren Oberfläche des äußeren Mantels über die gesamte Länge der Leitung auf solche Weise angelegt wird, dass der innere Mantel der Leitung durch den Joule-Effekt beheizt wird,
**dadurch gekennzeichnet, dass** es ferner umfasst:
zumindest eine Schicht aus resistivem und ferromagnetischem Material (18), die auf der äußeren Oberfläche des inneren Mantels über die gesamte Länge der Leitung auf solche Weise positioniert ist, dass das Verhältnis der auf den inneren Mantel übertragenen elektrischen Leistung erhöht wird.

8. System nach Anspruch 7, ferner umfassend eine Auskleidung aus leitendem und nicht magnetischem Material (16), die auf der inneren Oberfläche des äußeren Mantels über die gesamte Länge der Leitung positioniert ist.

9. System nach Anspruch 8, wobei die Auskleidung aus leitendem und nicht magnetischem Material (16) in Aluminium, in Kupfer, in Bronze, in Messing oder in Zink ausgeführt ist.

10. System nach einem der Ansprüche 8 und 9, wobei die Auskleidung aus leitendem und nicht magnetischem Material eine Dicke zwischen 1 und 6 mm besitzt.

11. System nach einem der Ansprüche 7 bis 9, wobei die Schicht aus resistivem und ferromagnetischem Material (18) in Elektrostahl oder in amorphem Metall ausgeführt ist.

12. System nach einem der Ansprüche 7 bis 11, wobei die Schicht aus resistivem und ferromagnetischem Material eine Dicke zwischen 1 und 3 mm besitzt.

13. System nach einem der Ansprüche 7 bis 12, wobei die mechanischen Verbindungen zwischen dem inneren Mantel und dem äußeren Mantel der Leitung ringförmige Schultern (15) sind, die regelmäßig über die gesamte Länge der Leitung beabstandet sind.

14. System nach einem der Ansprüche 8 bis 13, wobei der innere Mantel und der äußere Mantel der Leitung jeweils mehrere Mantelsektionen (2a) umfassen, die Stoß an Stoß durch Schweißnähte (8, 10) miteinander verbunden sind, wobei die Auskleidung aus leitendem und nicht magnetischem Material und die Schicht aus resistivem und ferromagnetischem Material jeweils Unterbrechungen (16a, 18a) an den Schweißnähten aufweisen.

15. System nach Anspruch 14, wobei die elektrische Durchgängigkeit der Auskleidung aus leitendem und nicht magnetischem Material und der Schicht aus resistivem und ferromagnetischem Material direkt durch den inneren und äußeren Mantel hergestellt wird.

16. System nach Anspruch 14, wobei die elektrische Durchgängigkeit der Auskleidung aus leitendem und nicht magnetischem Material und der Schicht aus resistivem und ferromagnetischem Material indirekt über einen leitenden ringförmigen Ring (22) oder eine leitende Muffe (26) hergestellt wird, die an den Schweißnähten positioniert werden.

## Claims

1. A method for direct electrical heating of a pipe-in-pipe pipeline for transporting fluids, the pipeline (2) comprising a steel inner shell (4) intended to transport fluids and a steel outer shell (6) positioned around the inner shell while being coaxial therewith in order to delimit an annular space (12) therewith, the method comprising:
mechanically connecting the inner shell to the outer shell at different intervals of the pipeline;
establishing an electrical and thermal insulation between the inner shell and the outer shell over the entire length of the pipeline; and
applying an alternating electric current between an outer surface of the inner shell and an inner surface of the outer shell over the entire length of the pipeline so as to heat the inner shell of the pipeline by Joule effect;
**characterized in that** it further comprises:
placing on the outer surface of the inner shell over the entire length of the pipeline at least one layer made of resistive and ferromagnetic material (18) so as to increase the ratio of electric power transmitted to the inner shell.

2. The method according to claim 1, further comprising placing on the inner surface of the outer shell over the entire length of the pipeline a jacket made of conductive and non-magnetic material (16).

3. The method according to claim 1 or claim 2, wherein the alternating electric current which flows on the outer surface of the inner shell by skin effect and on the inner surface of the outer shell by proximity effect has a frequency of 50 Hz or 60 Hz.

4. The method according to any one of claims 1 to 3, wherein the alternating electric current is applied at a single point in the pipeline.

5. The method according to any one of claims 1 to 3, wherein the alternating electric current is applied at several points of the pipeline each corresponding to at least one pipeline section (2a), each pipeline section comprising an inner shell section (4a) and an outer shell section (6a).

6. The method according to any one of claims 2 to 5, wherein placing the jacket made of conductive and non-magnetic material (16) comprises inserting a tube made of conductive and non-magnetic material inside the outer shell, then expanding under pressure the tube against the inner surface of the outer shell.

7. A direct electrical heating system of a pipe-in-pipe pipeline for transporting fluids, the pipeline (2) comprising a steel inner shell (4) intended to transport fluids and a steel outer shell (6) positioned around the inner shell while being coaxial therewith to delimit an annular space therewith, the system comprising:
a plurality of mechanical links (15) between the inner shell and the outer shell which are positioned at different intervals of the pipeline;
an electrical and thermal insulation between the inner shell and the outer shell which is positioned over the entire length of the pipeline; and
an alternating electric current generator (20) applied between an outer surface of the inner shell and an inner surface of the outer shell over the entire length of the pipeline so as to heat the inner shell of the pipeline by Joule effect;
**characterized in that** it further comprises:
at least one layer made of resistive and ferromagnetic material (18) positioned on the outer surface of the inner shell over the entire length of the pipeline so as to increase the ratio of electric power transmitted to the inner shell.

8. The system according to claim 7, further comprising a jacket made of conductive and non-magnetic material (16) positioned on the inner surface of the outer shell over the entire length of the pipeline.

9. The system according to claim 8, wherein the jacket made of conductive and non-magnetic material (16) is made of aluminum, copper, bronze, brass or zinc.

10. The system according to claim 8 or claim 9, wherein the jacket made of conductive and non-magnetic material has a thickness comprised between 1 and 6 mm.

11. The system according to any one of claims 7 to 9, wherein the layer made of resistive and ferromagnetic material (18) is made of electrical steel or amorphous metal.

12. The system according to any one of claims 7 to 11, wherein the layer made of resistive and ferromagnetic material has a thickness comprised between 1 and 3 mm.

13. The system according to any one of claims 7 to 12, wherein the mechanical links between the inner shell and the outer shell of the pipeline are annular shoulders (15) evenly spaced over the entire length of the pipeline.

14. The system according to any one of claims 8 to 13, wherein the inner shell and the outer shell of the pipeline each comprise a plurality of shell sections (2a) connected end-to-end to each other by weld beads (8, 10), the jacket made of conductive and non-magnetic material and the layer made of resistive and ferromagnetic material having discontinuities (16a, 18a) at the weld beads.

15. The system according to claim 14, wherein the electrical continuity of the jacket made of conductive and non-magnetic material and of the layer made of resistive and ferromagnetic material is achieved directly through the inner and outer shells.

16. The system according to claim 14, wherein the electrical continuity of the jacket made of conductive and non-magnetic material and of the layer made of resistive and ferromagnetic material is achieved indirectly through a conductive annular ring (22) or a conductive sleeve (26) which are positioned at the weld beads.
